# FASCICULE DE BREVET EUROPEEN

(11) **EP 3 395 644 B1**
(45) Date de publication et mention de la délivrance du brevet: **08.10.2025**
(21) Numéro de dépôt: 18177794.7
(22) Date de dépôt: 07.08.2014
(51) Int. Cl.: B62B 5/00, B62B 3/00

(54) **VOLET ANTICHUTE POUR MODULE LOGISTIQUE**
STURZSCHUTZKLAPPE FÜR LOGISTIKMODUL
FALL-PREVENTION FLAP FOR LOGISTICS MODULE

(30) Priorité: 12.08.2013 FR 1357953
(43) Date de publication de la demande: 31.10.2018
(62) Demande divisionnaire de: 14796154.4
(73) Titulaire: YTHALES INVEST, 37520 La Riche (FR)
(72) Inventeur: CHERBONNIER, Yves, 37000 Tours (FR)
(74) Mandataire: den Braber, Gérard Paul

(56) Documents cités:
- EP-A1- 0 008 769
- DE-B3- 102012 000 077
- JP-A- 2004 142 811
- US-A- 5 226 544
- US-A1- 2012 247 629

## Description

### DOMAINE TECHNIQUE

Un aspect de l'invention concerne un volet antichute apte à obturer, au moins partiellement, une ouverture laissée entre deux parois d'un module logistique. Le module logistique peut être, par exemple, sous forme d'un chariot ou d'un conteneur apte à stocker, au moins temporairement, des marchandises. Le volet antichute peut donc trouver des applications dans des magasins, ainsi que dans des centres logistiques pour approvisionner des magasins. D'autres aspects de l'invention concernent un ensemble comprenant un volet antichute et une baguette, ainsi qu'un tel ensemble comprenant en outre un module logistique.

### ETAT DE LA TECHNIQUE ANTERIEURE

La publication brevet EP 1 428 763 A1 décrit un chariot de stockage de marchandises comprenant une embase et deux ridelles verticales montées sur celle-ci. Le chariot est muni d'un volet antichute pour recouvrir un côté du chariot défini entre ces deux ridelles. Au fait, ce côté constitue une ouverture définie entre deux parois sous forme de ridelles. Le volet antichute peut obturer cette ouverture. Plus précisément, le volet antichute est fixé sur les deux ridelles de façon que le volet antichute soit ouvrable, ou même amovible. Un opérateur peut ainsi convenablement ouvrir, ou temporairement retirer, le volet antichute pour placer des marchandises dans le chariot, ou pour enlever des marchandises du chariot.

La publication brevet DE 10 2012 000077 B3 décrit un chariot, en particulier un conteneur de type CC pour le transport de plantes et de fleurs. Le chariot comprend une base rectangulaire munie de quatre montants définissant un espace de stockage accessible par deux côtés longitudinaux et deux côtés étroits. Le chariot est muni d'un ensemble de volets roulant, un volet roulant pour chacun des côtés précités. Le volet roulant peut être déplacé verticalement, vers le bas ou vers le haut, pour obturer l'espace de stockage et pour donner accès à l'espace de stockage.

### EXPOSE DE L'INVENTION

Il existe un besoin pour une solution permettant une flexibilité d'utilisation d'un volet antichute.

A cet égard, les points suivants ont été pris en considération. Lorsqu'un volet antichute obture une ouverture laissée entre deux parois d'un module logistique, il convient que le volet antichute soit suffisamment tendu horizontalement et verticalement. Ces tensions horizontales et verticales permettent au volet antichute d'efficacement empêcher une chute de marchandises stockées dans le module logistique, par exemple, lors d'un transport. C'est-à-dire, les tensions horizontales et verticales contribuent de façon importante à une fonction antichute.

Une tension horizontale suffisamment importante peut être obtenue au moyen d'éléments fixant le volet antichute à l'une et l'autre des deux parois du module logistique afin que l'ouverture laissée entre ces parois soit obturée. Une tension verticale peut être obtenue au moyen d'éléments d'arrêt disposés sur l'une et l'autre des deux parois. Ces éléments d'arrêt peuvent être constitués, par exemple, par des traverses lorsque les deux parois sont sous forme de ridelles.

Toutefois, afin que la tension verticale recherchée soit obtenue, les éléments d'arrêt doivent être positionnés à une hauteur correspondant à celle du volet antichute. Cette condition peut être respectée en concevant un volet antichute spécifiquement pour un module logistique. Toutefois, lorsque le volet antichute est apposé sur un autre module logistique, d'un autre type, il se peut que cet autre module logistique ne comprenne pas d'éléments d'arrêt convenablement positionnés par rapport au volet antichute. Dans ce cas, le volet antichute en manque de tension verticale s'affale, c'est-à-dire, s'effondre partiellement. Cela peut sérieusement nuire à la fonction antichute.

Selon un aspect de l'invention, un ensemble comprenant un module logistique et un volet antichute apposé sur le module logistique est tel que défini à la revendication 1. Les revendications dépendantes 2 à 11 définissent des caractéristiques supplémentaires qui peuvent être appliquées pour mettre en œuvre l'invention.

A titre illustratif, une description détaillée de quelques modes de réalisation de l'invention est présentée dans ce qui suit en référence à des dessins annexes.

### DESCRIPTION SOMMAIRE DES DESSINS

- La figure 1 est un diagramme schématique illustrant un volet antichute, vu de face, muni d'un support de baguette apte à retenir de façon amovible une baguette.
- La figure 2 est un diagramme schématique illustrant une partie du volet antichute, vu en perspective, comprenant l'support de baguette et une baguette introduite dans celui-ci.
- La figure 3 est un diagramme schématique illustrant un module logistique, vu en perspective, muni du volet antichute, lorsque celui-ci est en position ouverte.
- La figure 4 est un diagramme schématique illustrant le module logistique, vu en perspective, muni du volet antichute, lorsque celui-ci est en position fermée.

### DESCRIPTION DETAILLEE

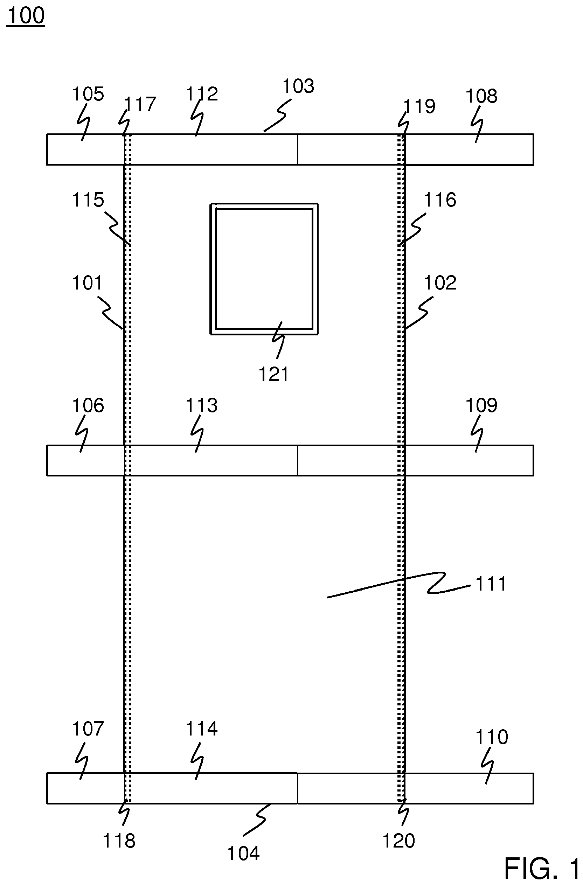

La figure 1 illustre schématiquement, par une vue en face, un volet antichute 100. Ce volet antichute 100 peut être apposé sur un module logistique, tel qu'un chariot ou un conteneur, afin d'obturer une ouverture laissée entre deux parois du module logistique.

Le volet antichute 100 comprend deux bords longitudinaux : un bord gauche 101 et un bord droit 102. Ces deux bords longitudinaux 101, 102 sont orientés verticalement lorsque le volet antichute 100 est apposé sur un module logistique. Le volet antichute 100 comprend deux bords transversaux : un bord haut 103 et un bord bas 104. Ces deux bords transversaux 103, 104 sont orientés horizontalement lorsque le volet antichute 100 est apposé sur un module logistique.

Le bord gauche 101 est muni de trois rubans de fixation verrouillée : un ruban de fixation verrouillée haut 105, un ruban de fixation verrouillée médian 106, et un ruban de fixation verrouillée bas 107. Le ruban de fixation verrouillée haut 105 se situe près du bord haut 103 du volet antichute 100. Le ruban de fixation verrouillée bas 107 se situe près du bord bas 104 du volet antichute 100. Le ruban de fixation verrouillée médian 106 se situe approximativement à mi-chemin entre les deux bords transversaux 103, 104 précités.

Les trois rubans de fixation verrouillée 105, 106, 107 peuvent être repliés sur eux-mêmes en boucle, et cela de façon fixe, autour d'un montant d'un module logistique. Les trois rubans de fixation verrouillée 105, 106, 107 peuvent être maintenus en boucle au moyen, par exemple, de rivets. Les trois rubans de fixation verrouillée 105, 106, 107 fixent alors de façon verrouillée le bord gauche 101 du volet antichute 100 au montant en question du module logistique. Ce montant peut ainsi constituer un axe de pivotement pour le volet antichute 100.

Le bord droit 102 comprend trois rubans de fixation amovible : un ruban de fixation amovible haut 108, un ruban de fixation amovible médian 109, et un ruban de fixation amovible bas 110. Le ruban de fixation amovible haut 108 se situe près du bord haut 103 du volet antichute 100. Le ruban de fixation amovible bas 110 se situe près du bord bas 104 du volet antichute 100. Le ruban de fixation amovible médian 109 se situe approximativement à mi-chemin entre les deux transversaux 103, 104 précités. Les trois rubans de fixation amovible 107, 108, 109 peuvent être des rubans auto-agrippant.

Les trois rubans de fixation amovible 108, 109, 110 permettent de fixer de façon amovible le bord droit 102 du volet antichute 100 à un montant d'un module logistique. Lorsque les trois rubans de fixation amovible 108, 109, 110 sont détachés, le volet antichute 100 peut pivoter autour d'un montant auquel le bord gauche 101 du volet antichute 100 est fixé comme décrit dans ce qui précède. Lorsque les trois rubans de fixation amovible 108, 109, 110 sont attachés à un montant opposé au montant qui constituent l'axe de pivotement, le volet antichute 100 peut obturer une ouverture entre ces montants afin d'éviter une chute de marchandises.

Le volet antichute 100 comprend une feuille d'obturation 111 relativement légère, qui sera typiquement souple. La feuille d'obturation 111 peut être formée à base de matériau plastique comme, par exemple, à base de polyéthylène, à base de polychlorure de vinyle, fréquemment désigné par le sigle PVC, ou tout autre matériau plastique approprié. La feuille d'obturation 111 peut comprendre une trame en matière plastique munie d'un revêtement de même nature.

Le volet antichute 100 comprend en outre trois bandes de renfort : une bande de renfort haute 112, une bande de renfort médiane 113, et une bande de renfort basse 114. Ces bandes de renfort s'apparentent à des sangles. Les trois bandes de renfort 112, 113, 114 confèrent une rigidité au volet antichute 100 afin que celui-ci résiste à des poussées que des marchandises peuvent exercer sur le volet antichute 100, notamment sur la feuille d'obturation 111.

La figure 1 illustre un exemple de réalisation où les trois rubans de fixation verrouillée 105, 106, 107 et les trois rubans de fixation amovible 108, 109, 110 constituent des rallonges des trois bandes de renfort 112, 113, 114. Plus précisément, le ruban de fixation verrouillée haut 105 constitue une rallonge à une extrémité gauche de la bande de renfort haute 112. Le ruban de fixation amovible haut 108 constitue une rallonge à une extrémité droite de la bande de renfort haute 112. De même, le ruban de fixation verrouillée médian 106 constitue une rallonge à une extrémité gauche de la bande de renfort médiane 113. Le ruban de fixation amovible médian 109 constitue une rallonge à une extrémité droite de la bande de renfort médiane 113. Le ruban de fixation verrouillée bas 107 constitue une rallonge à une extrémité gauche de la bande de renfort médiane 113. Le ruban de fixation amovible bas 110 constitue une rallonge à une extrémité droite de la bande de renfort basse 114.

De manière générale, la bande de renfort haute 112 constitue un renforcement dans une zone où le ruban de fixation verrouillée haut 105 est localisé. De même, la bande de renfort médiane 113 constitue un renforcement dans une zone où le ruban de fixation verrouillée médian 106 est localisé, et la bande de renfort basse 114 constitue un renforcement dans une zone où le ruban de fixation verrouillée bas 107 est localisé.

Le volet antichute 100 est muni de deux supports de baguettes : un support de baguette gauche 115 et un support de baguette droit 116. Ces supports de baguettes sont très schématiquement représentés à la figure 1. Le support de baguette gauche 115 se situe près du bord gauche 101 du volet antichute 100. Le support de baguette droit 116 se situe près du bord droit 102 du volet antichute 100.

Le support de baguette gauche 115 comprend deux extrémités : une extrémité haute 117 et une extrémité basse 118. L'extrémité haute 117 se situe au bord haut 103 du volet antichute 100. L'extrémité basse 118 se situe au bord bas 104 du volet antichute 100. Le support de baguette droit 116 comprend deux extrémités similaires : une extrémité haute 119 au bord haut 103 du volet antichute 100 et une extrémité basse 120 au bord bas 104 du volet antichute 100.

Le support de baguette gauche 115 peut retenir une baguette de façon amovible. C'est-à-dire, un opérateur peut introduire une baguette dans le support de baguette gauche 115. Le support de baguette gauche 115 retient la baguette, qui est ainsi solidaire au volet antichute 100. Le support de baguette gauche 115 retient la baguette dans une orientation verticale lorsque le volet antichute 100 est apposé sur un module logistique. Un opérateur peut aussi retirer la baguette du support de baguette gauche 115, par exemple, si l'operateur estime que son utilisation n'est pas nécessaire ou pour un autre motif. Les remarques qui précèdent s'appliquent également au support de baguette droit 116, qui peut similairement retenir une baguette de façon amovible.

Une baguette à introduire dans le support de baguette gauche 115 a avantageusement une longueur qui correspond à une distance entre les deux extrémités 117, 118 du support de baguette gauche 115. Ainsi, la baguette s'étend entre les deux bords transversaux 103, 104 du volet antichute 100, près du bord gauche 101 de celui-ci. Les remarques s'appliquent également à une baguette à introduire dans le support de baguette droit 116. Cette baguette s'étend aussi avantageusement entre les deux bords transversaux 103, 104 du volet antichute 100, près du bord droit 102 de celui-ci.

Un jeu de baguettes identiques, tout au moins en longueur, peut être prévu pour le volet antichute 100 illustré à la figure 1. Une quelconque baguette de ce jeu peut être introduite dans le support de baguette gauche 115. De même, une quelconque baguette de ce jeu peut être introduite dans le support de baguette droit 116. Cela est dû au fait que, dans l'exemple illustré, la distance entre les deux extrémités 117, 118 du support de baguette gauche 115 et la distance entre les deux extrémités 119, 120 du support de baguette droit 116 sont identiques, ou tout au moins, quasi-identiques. Ces distances peuvent être considérées comme identiques si, par exemple, elles ne différent moins d'un pourcent l'une de l'autre.

Le volet antichute 100 peut comprendre une pochette 121 sur une face avant comme l'illustre la figure 1. Une étiquette, ou toute autre forme de support plan, peut être insérée dans la pochette 121. L'étiquette peut comprendre une indication relative aux marchandises stockées dans un module logistique sur lequel le volet antichute 100 illustré à la figure 1 est apposé.

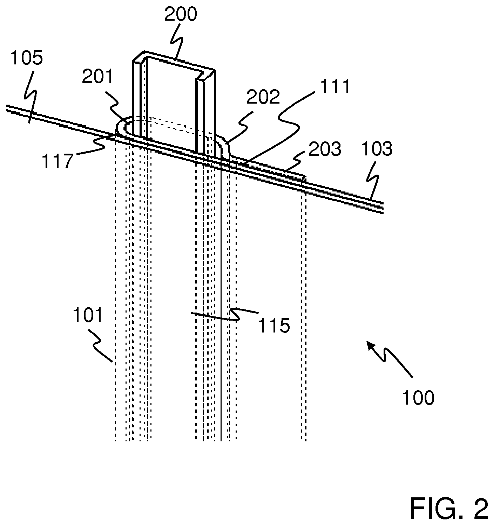

La figure 2 illustre schématiquement, par une vue en perspective, une partie du volet antichute 100 illustré à la figure 1. La partie illustrée à la figure 2 se situe près du bord gauche 101 et du bord haut 103. Une partie haute du support de baguette gauche 115, y compris son extrémité haute 117, sont visible à la figure 2. La figure 2 illustre en outre une baguette 200 en cours d'introduction dans le support de baguette gauche 115.

Le support de baguette gauche 115 comprend une gaine 201 dans lequel la baguette 200 peut être introduite comme l'illustre la figure 2. La gaine 201 est formée par une partie gauche 202 de la feuille d'obturation 111 repliée longitudinalement sur elle-même. Une bordure 203 de cette partie repliée 202 est fixée à une partie principale de la feuille d'obturation 111, qui s'étend entre les deux bords longitudinaux 101,102 du volet antichute 100 Cette fixation peut comprendre, par exemple, des coutures.

La gaine 201 est dimensionnée de sorte que la baguette 200 est étroitement enserrée dans la gaine 201 après son introduction. Par conséquent, il existe une friction longitudinale entre la baguette 200 et la gaine 201. Cette friction évite des mouvements de la baguette 200 par rapport à la gaine 201, et vice versa. La baguette 200 évite ainsi que le volet antichute 100 s'affale, s'effondre, même localement.

La figure 2 illustre un mode de réalisation qui ne comprend pas d'arrêt à l'extrémité haute 117 du support de baguette gauche 115 visible à la figure 2. Un arrêt n'est pas nécessaire car la gaine 201 enserre la baguette 200 suffisamment étroitement. Néanmoins, il est possible de prévoir un arrêt à l'extrémité haute 117 du support de baguette 115. Un arrêt est avantageusement prévu à l'extrémité basse 118 du support de baguette gauche 115, visible à la figure 1.

La baguette 200 illustrée à la figure 2 comprend un profilé en forme de U. Cette forme confère à la baguette 200 une bonne rigidité, une bonne tenue. La baguette 200 peut ainsi être relativement légère. La baguette 200 peut être formée, par exemple, de matériau plastique, ou de métal.

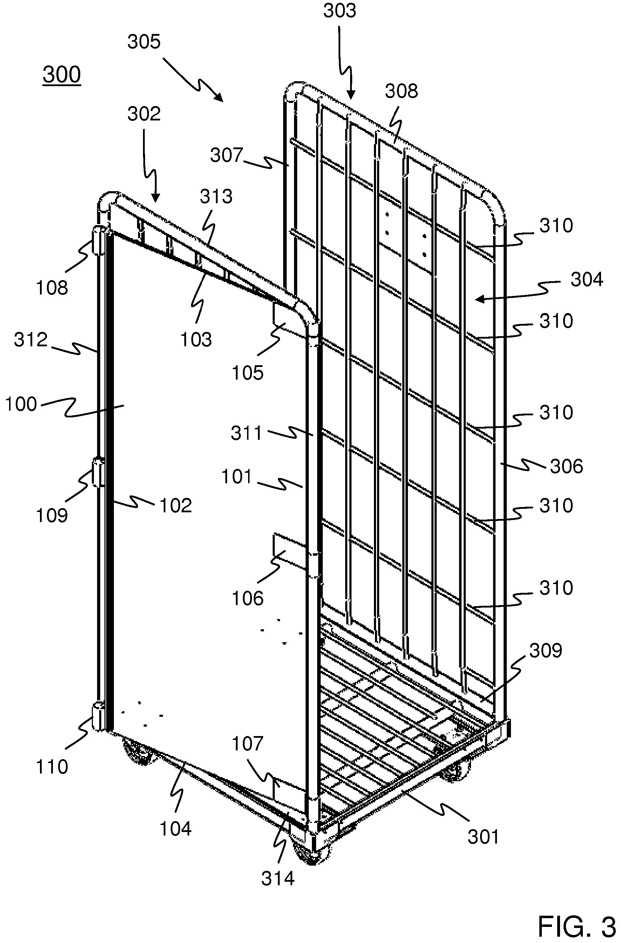

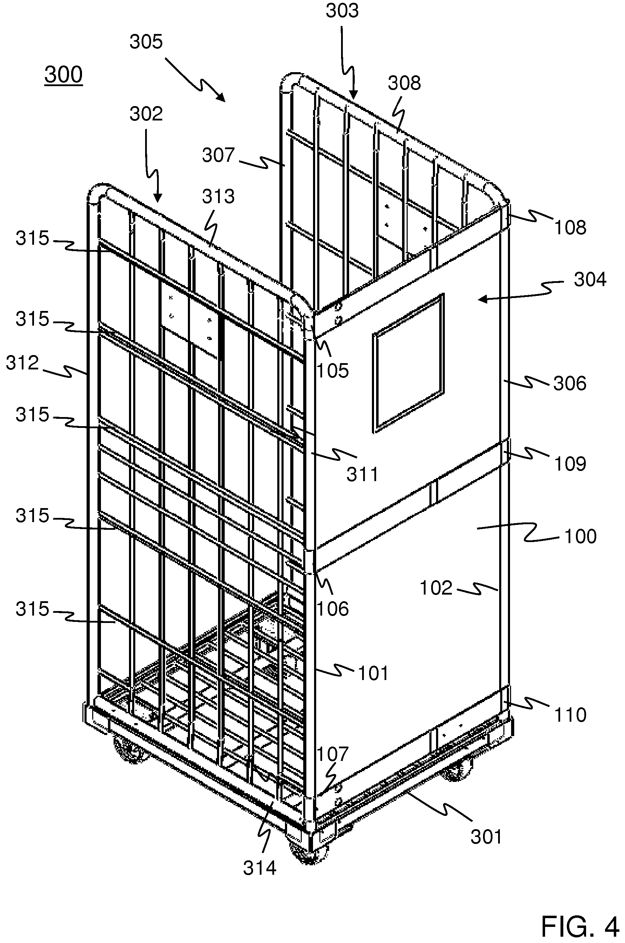

Les figures 3 et 4 illustrent schématiquement un module logistique 300, vu en perspective, muni du volet antichute 100 illustré à la figure 1. La figure 3 illustre le module logistique 300 dans un état ouvert. Le volet antichute 100 est en position ouverte. La figure 4 illustre le module logistique 300 dans un état fermé. Le volet antichute 100 est en position fermée. Le module logistique 300 illustré à la figure 3 est en forme d'un chariot et sera ainsi désigné « chariot 300 » dans ce qui suit pour des raisons de convenance.

Le chariot 300 comprend une base 301 principalement formé par un cadre dans lequel une grille a été aménagée. Le chariot 300 comprend en outre deux parois sous forme de ridelles : une ridelle qui sera désignée ridelle gauche 302 dans ce qui suit, et une autre ridelle qui sera désignée ridelle droite 303. Le chariot 300 présente deux ouvertures laissées entre ces deux ridelles 302, 303 : une ouverture qui sera désignée ouverture avant 304 dans ce qui suit, et une autre ouverture qui sera désignée ouverture arrière 305.

La ridelle droite 303 comprend une paire de montants périphériques, à savoir un montant périphérique avant 306 et un montant périphérique arrière 307, et une paire de traverses périphériques, à savoir une traverse périphérique haute 308 et une traverse périphérique basse 309. Ces éléments périphériques constituent conjointement un cadre de la ridelle droite 303. Des traverses intermédiaires 310 sont disposées entre une section intermédiaire du montant périphérique avant 306 et une section intermédiaire du montant périphérique arrière 307. L'une et l'autre section intermédiaire s'étendent entre deux extrémités du montant périphérique en question comme l'illustre la figure 3.

La ridelle gauche 302 possède une structure similaire, visible à la figure 4. La ridelle gauche 302 comprend un cadre formé par un montant périphérique avant 311, un montant périphérique arrière 312, une traverse périphérique haute 313, et une traverse périphérique basse 314. Des traverses intermédiaires 315 sont disposées entre une section intermédiaire du montant périphérique avant 311 et une section intermédiaire du montant périphérique arrière 312.

Les trois rubans de fixation verrouillée 105, 106, 107 du volet antichute 100 sont repliés sur eux-mêmes en boucle, et cela de façon fixe, autour du montant périphérique avant 311 de la ridelle gauche 302 du chariot 300. Les trois rubans de fixation verrouillée 105, 106, 107 fixent alors de façon verrouillée le bord gauche 101 du volet antichute 100 à ce montant périphérique avant 311. Le montant périphérique avant 311 de la ridelle gauche 302 constitue ainsi un axe de pivotement pour le volet antichute 100.

Dans l'état ouvert, illustré à la figure 3, les trois rubans de fixation amovible 108, 109, 110 du volet antichute 100 fixent de façon amovible le bord droit 102 du volet antichute 100 au montant périphérique arrière 312 de la ridelle gauche 302 du chariot 300. Ainsi, le volet antichute 100 côtoie la ridelle gauche 302. Dans cet état, il peut être considéré que le volet antichute 100 fait corps avec la ridelle gauche 302.

Dans l'état fermé, illustré à la figure 4, les trois rubans de fixation amovible 108, 109, 110 fixent de façon amovible le bord droit 102 du volet antichute 100 au montant périphérique avant 306 de la ridelle droite 303 du chariot 300. Ainsi, le volet antichute 100 obture l'ouverture avant 304 du chariot 300 laissée entre les deux ridelles 302, 303 de celui-ci.

Dans l'état fermé, illustré à la figure 4, le volet antichute 100 assure une fonction antichute comme l'identique son nom. Des marchandises placées dans le chariot 300 sont retenues dans celui-ci, grâce au volet antichute 100 dans sa position fermée. Lors d'un transport, une marchandise peut se déplacer en direction de l'ouverture avant 304 du chariot 300. Cette marchandise se bute alors contre le volet antichute 100, qui obture cette ouverture avant 304, évitant ainsi une chute de la marchandise en question.

Plus en détails, le ruban de fixation verrouillée bas 107 du volet antichute 100 repose sur la traverse périphérique basse 314 de la ridelle gauche 302 par gravité. C'est-à-dire, lorsque le volet antichute 100 est légèrement soulevé, puis relâché, le ruban de fixation verrouillée bas 107, ainsi que le bord bas 104 du volet antichute 100, se butent contre la traverse périphérique basse 314. La traverse périphérique basse 314 constitue ainsi un élément de butée bas sur le montant périphérique avant 311 de la ridelle gauche 302, auquel le volet antichute 100 est fixé de façon verrouillée.

En revanche, le ruban de fixation verrouillée haut 105 ne repose sur aucune traverse de la ridelle gauche 302. Ceci est dû au fait que le volet antichute 100 n'a pas été adapté spécialement au chariot 300. Plus précisément, le volet antichute 100 a une hauteur qui dépasse une distance entre la traverse périphérique basse 314, qui constitue l'élément de butée bas, et la traverse intermédiaire la plus haute 315 de la ridelle gauche 302.

A des fins d'explications, il est maintenant supposé que le volet antichute 100 illustré à la figure 3 ne comprend aucun support de baguette, et ne comprend donc aucune baguette s'étendant entre les deux bords transversaux 103, 104 du volet antichute 100. Dans cette hypothèse, le volet antichute 100 aurait tendance à s'affaler par absence de tension verticale. Cet affalement, effondrement, peut faire que le volet antichute 100 n'a pas une tenue suffisamment bonne pour maintenir des marchandises dans le chariot 300. Il y a un risque de chute des marchandises.

Il est maintenant supposé, de nouveau, que le volet antichute 100 illustré à la figure 3 correspond au volet antichute 100 illustré à la figure 1, et décrit en référence à cette figure. Ce volet antichute 100 comprend le support de baguette gauche 115 qui s'étend entre les deux bords transversaux 103, 104 du volet antichute 100. Le support de baguette gauche 115 présente donc une longueur correspondant à la hauteur du volet antichute 100. Il en va de même pour le support de baguette droit 116.

Il est en outre supposé qu'une baguette a été introduite dans le support de baguette gauche 115 et qu'une autre baguette a été introduite dans le support de baguette droit 116. L'une et l'autre baguette ont chacune une longueur correspondant respectivement à celle du support de baguette gauche 115 et à celle du support de baguette droit 116. La longueur des baguettes est identique, ou quasi-identique, et correspond à la hauteur du volet antichute 100.

Les deux supports de baguette 115, 116 et les baguettes introduites dans celles-ci évitent un affalement du volet antichute 100 qui pourrait nuire à la fonction antichute de celui-ci. Les éléments précités assurent une bonne tenue du volet antichute 100, même si celui-ci n'est pas spécifiquement adapté au chariot 300 sur lequel le volet antichute 100 est apposé.

Plus spécifiquement, la baguette introduite dans le support de baguette gauche 115 coopère avec ce support de sorte que ces éléments assurent une tension verticale du volet antichute 100 près du bord gauche 101 de celui-ci. Dans l'exemple illustré aux figures 1 et 2, le support de baguette gauche 115 comprend une gaine enserrant étroitement la baguette introduite dans cette gaine. Il existe donc une friction longitudinale entre la baguette et la gaine, qui assure la tension verticale. La baguette introduite dans le support de baguette droit 116 coopère d'une même façon avec ce support de sorte que ces éléments assurent une tension verticale du volet antichute 100 près du bord droit 102 de celui-ci.

### REMARQUES COMPLEMENTAIRES

La description détaillée qui vient d'être faite en référence aux dessins n'est qu'une illustration de quelques modes de réalisation de l'invention. L'invention peut être réalisée de nombreuses façons différentes. Afin d'illustrer ceci, quelques alternatives sont indiquées sommairement.

L'invention peut être appliquée avantageusement à de nombreux produits et procédés logistiques. Par exemple, l'invention peut, en principe, être appliquée à tous types de modules logistiques présentant une ouverture laissée entre deux parois. Un chariot tel qu'illustré aux figures 3 et 4 n'est qu'un exemple d'un tel module logistique. Le module logistique peut également être sous forme d'un conteneur dépourvu de roulettes. Une ouverture à obturer par un volet antichute peut se situer entre deux parois disposées dans un même plan, dans lequel l'ouverture se situe également. De façon globale, le terme « module logistique » doit donc être interprété de façon large. Ce terme embrasse toute entité dans laquelle des objets peuvent être posés pour des besoins de stockage ou de transport.

Il existe différentes façons de réaliser un volet antichute conforme à l'invention. Un support de baguette ne doit pas nécessairement comprendre une gaine, pouvant enserrer étroitement une baguette introduite dans celle-ci. Par exemple, dans un autre mode de réalisation, le support de baguette peut comprendre une gaine relativement large par rapport à une baguette de sorte qu'il y a relativement peu de friction longitudinale entre ces éléments. Dans ce mode de réalisation, la baguette peut être enserrée entre deux arrêts se situant à deux extrémités opposées de la gaine. Ainsi, ces éléments exercent une tension verticale sur le volet antichute. Encore un autre mode de réalisation peut être obtenu en supprimant partiellement, ou même totalement, la gaine.

Un volet antichute conforme à l'invention peut, en principe, comprendre un quelconque nombre de supports de baguette. Par exemple, un support de baguette peut être ajouté au volet antichute illustré à la figure 1. Ce support de baguette supplémentaire peut se situer, par exemple, à mi-chemin entre le support de baguette gauche 115 et le support de baguette droit 116. Dans encore un autre mode de réalisation, un volet antichute peut comprendre qu'un seul support de baguette convenablement positionné.

Un support de baguette ne doit pas nécessairement être agencé pour retenir une baguette de façon amovible, tel que le support de baguette gauche 115 illustré à la figure 2. Par exemple, dans un autre mode de réalisation, le support de baguette peut être sous forme d'une gaine définitivement fermée après l'introduction d'une baguette. Cette fermeture définitive peut se faire au moyen, par exemple, d'un rivet.

Un volet antichute conforme à l'invention ne doit pas nécessairement comprendre des bandes de renforts telles qu'illustrées à la figure 1. Un mode de réalisation peut même être totalement dépourvu de bandes de renfort dans le cas où, par exemple, le volet antichute présente une bonne rigidité de sorte que le volet antichute peut suffisamment bien résister à une pression exercée par une marchandise se butant contre le volet antichute.

Il existe de nombreux différents moyens pour fixer un volet antichute à module logistique, de façon amovible ou verrouillée. Par exemple, un crochet peut constituer un moyen de fixation. Le crochet peut être muni d'une forme de serrure pour que la fixation soit verrouillée.

Les remarques qui précèdent montrent que la description détaillée en référence aux figures, illustre l'invention plutôt qu'elle ne la limite. Les signes de références n'ont aucun caractère limitatif. Les verbes « comprendre » et « comporter » n'excluent pas la présence d'autres éléments ou d'autres étapes que ceux listés dans les revendications. Le mot « un » ou « une » précédant un élément ou une étape n'exclu pas la présence d'une pluralité de tels éléments ou de telles étapes.

### REMARQUES COMPLEMENTAIRES

La description détaillée qui vient d'être faite en référence aux dessins n'est qu'une illustration de quelques modes de réalisation de l'invention. L'invention peut être réalisée de nombreuses façons différentes. Afin d'illustrer ceci, quelques alternatives sont indiquées sommairement.

L'invention peut être appliquée avantageusement à de nombreux produits et procédés logistiques. Par exemple, l'invention peut, en principe, être appliquée à tous types de modules logistiques présentant une ouverture laissée entre deux parois. Un chariot tel qu'illustré aux figures 3 et 4 n'est qu'un exemple d'un tel module logistique. Le module logistique peut également être sous forme d'un conteneur dépourvu de roulettes. Une ouverture à obturer par un volet antichute peut se situer entre deux parois disposées dans un même plan, dans lequel l'ouverture se situe également. De façon globale, le terme « module logistique » doit donc être interprété de façon large. Ce terme embrasse toute entité dans laquelle des objets peuvent être posés pour des besoins de stockage ou de transport.

Il existe différentes façons de réaliser un volet antichute conforme à l'invention. Un support de baguette ne doit pas nécessairement comprendre une gaine, pouvant enserrer étroitement une baguette introduite dans celle-ci. Par exemple, dans un autre mode de réalisation, le support de baguette peut comprendre une gaine relativement large par rapport à une baguette de sorte qu'il y a relativement peu de friction longitudinale entre ces éléments. Dans ce mode de réalisation, la baguette peut être enserrée entre deux arrêts se situant à deux extrémités opposées de la gaine. Ainsi, ces éléments exercent une tension verticale sur le volet antichute. Encore un autre mode de réalisation peut être obtenu en supprimant partiellement, ou même totalement, la gaine.

Un volet antichute conforme à l'invention peut, en principe, comprendre un quelconque nombre de supports de baguette. Par exemple, un support de baguette peut être ajouté au volet antichute illustré à la figure 1. Ce support de baguette supplémentaire peut se situer, par exemple, à mi-chemin entre le support de baguette gauche 115 et le support de baguette droit 116. Dans encore un autre mode de réalisation, un volet antichute peut comprendre qu'un seul support de baguette convenablement positionné.

Un support de baguette ne doit pas nécessairement être agencé pour retenir une baguette de façon amovible, tel que le support de baguette gauche 115 illustré à la figure 2. Par exemple, dans un autre mode de réalisation, le support de baguette peut être sous forme d'une gaine définitivement fermée après l'introduction d'une baguette. Cette fermeture définitive peut se faire au moyen, par exemple, d'un rivet.

Un volet antichute conforme à l'invention ne doit pas nécessairement comprendre des bandes de renforts telles qu'illustrées à la figure 1. Un mode de réalisation peut même être totalement dépourvu de bandes de renfort dans le cas où, par exemple, le volet antichute présente une bonne rigidité de sorte que le volet antichute peut suffisamment bien résister à une pression exercée par une marchandise se butant contre le volet antichute.

Il existe de nombreux différents moyens pour fixer un volet antichute à module logistique, de façon amovible ou verrouillée. Par exemple, un crochet peut constituer un moyen de fixation. Le crochet peut être muni d'une forme de serrure pour que la fixation soit verrouillée.

Les remarques qui précèdent montrent que la description détaillée en référence aux figures, illustre l'invention plutôt qu'elle ne la limite. Les signes de références n'ont aucun caractère limitatif. Les verbes « comprendre » et « comporter » n'excluent pas la présence d'autres éléments ou d'autres étapes que ceux listés dans les revendications. Le mot « un » ou « une » précédant un élément ou une étape n'exclu pas la présence d'une pluralité de tels éléments ou de telles étapes.

## Revendications

1. Ensemble comprenant un module logistique (300) apte à stocker, au moins temporairement, des marchandises, le module logistique présentant une ouverture (304) laissée entre deux parois (302, 303), et un volet antichute (100) apposé sur le module logistique, le volet antichute (100) étant dimensionné pour obturer, au moins partiellement, l'ouverture (304) laissée entre les deux parois du module logistique,
**caractérisé en ce que** le volet antichute est muni d'un support de baguette (115) comprenant une extrémité (117) se situant à un bord transversal (103) du volet antichute et une autre extrémité (118) se situant à un autre bord transversal (104) du volet antichute, et une baguette (200) introduite dans le support de baguette et s'étendant entre les bords transversaux du volet antichute, le support de baguette étant positionné de sorte que la baguette et le support de baguette assurent une tension verticale du volet antichute obturant l'ouverture afin d'éviter un affalement du volet antichute pouvant nuire à la fonction antichute de celui-ci.

2. Ensemble selon la revendication 1, dans lequel le support de baguette (115) est apte à retenir la baguette de façon amovible.

3. Ensemble selon l'une quelconque des revendications 1 et 2, dans lequel le support de baguette (115) comprend une gaine (201) dans laquelle la baguette (200) peut être introduite.

4. Ensemble selon la revendication 3, dans lequel la gaine (201) est au moins partiellement formée par une feuille d'obturation (111) longitudinalement repliée sur elle-même, la feuille d'obturation étant dimensionnée pour obturer, au moins partiellement, l'ouverture (304) laissée entre les deux parois (302, 303) du module logistique (300).

5. Ensemble selon l'une quelconque des revendications 3 et 4, dans la gaine (201) est dimensionnée pour étroitement enserrer la baguette (200).

6. Ensemble selon l'une quelconque des revendications 1 à 5, dans lequel le volet antichute comprend deux bords longitudinaux (101, 102) dont un (101) est muni d'un dispositif de fixation verrouillée (105, 106, 107) pour fixer le volet antichute à un montant (311) d'une (302) des deux parois de façon à ce que ce montant puisse constituer un axe de pivotement pour le volet antichute, l'autre bord longitudinal (102) étant muni d'un dispositif de fixation amovible (108, 109, 110).

7. Ensemble selon la revendication 6, dans lequel le volet antichute comprend deux supports de baguette (115, 116), dont un (115) se situe près d'un (101) des deux bords longitudinaux du volet antichute, l'autre support de baguette (116) se situant près de l'autre bord longitudinal (102).

8. Ensemble selon l'une quelconque des revendications 6 et 7, dans lequel le volet antichute comprend un renforcement (112, 113, 114) dans une zone où le dispositif de fixation verrouillée (105, 106, 107) est localisé.

9. Ensemble selon la revendication 8, dans lequel le volet antichute comprend une bande de renfort (112, 113, 114) s'étendant entre le dispositif de fixation verrouillée (105, 106, 107) et le dispositif de fixation amovible (108, 109, 110).

10. Ensemble selon l'une quelconque des revendications 1 à 9, la baguette (200) comprenant un profilé en forme de U.

11. Ensemble selon l'une quelconque des revendications 1 à 10, dans laquelle au moins une des deux parois (302, 303) est sous forme d'une ridelle comprenant des traverses intermédiaires (305, 315) s'étendant entre une section intermédiaire d'un montant périphérique (311) de la ridelle et une section intermédiaire d'un autre montant périphérique (312) de la ridelle, le volet antichute (100) présentant une hauteur supérieure à une distance entre la traverse intermédiaire la plus haute et un élément de butée bas (314) sur un montant périphérique (311) de la ridelle, le support de baguette (115) et la baguette (200) s'étendant entre deux bords transversaux (103, 104) du volet antichute.

## Patentansprüche

1. Baugruppe, die ein Logistikmodul (300) umfasst, das dazu geeignet ist, Waren zumindest vorübergehend zu lagern, wobei das Logistikmodul eine Öffnung (304), die zwischen zwei Wänden (302, 303) belassen wird, und eine am Logistikmodul angebrachte Fallschutzklappe (100) aufweist, wobei die Fallschutzklappe (100) so dimensioniert ist, dass sie die Öffnung (304) zwischen den beiden Wänden des Logistikmoduls mindestens teilweise verschließt,
**dadurch gekennzeichnet, dass** die Fallschutzklappe mit einer Stabhalterung (115), die ein Ende (117) umfasst, das sich an einer Querkante (103) der Fallschutzklappe befindet, und ein anderes Ende (118), das sich an einer anderen Querkante (104) der Fallschutzklappe befindet, und einem Stab (200), der in die Stabhalterung eingeführt ist und sich zwischen den Querkanten der Fallschutzklappe erstreckt, wobei die Stabhalterung so positioniert ist, dass der Stab und die Stabhalterung eine vertikale Spannung der Fallschutzklappe gewährleisten, die die Öffnung verschließt, um ein Absacken der Fallschutzklappe zu vermeiden, das die Fallschutzfunktion dieser beeinträchtigen könnte.

2. Baugruppe nach Anspruch 1, wobei die Stabhalterung (115) dazu geeignet ist, den Stab lösbar zu halten.

3. Baugruppe nach einem der Ansprüche 1 und 2, wobei die Stabhalterung (115) eine Hülle (201) umfasst, in die der Stab (200) eingeführt werden kann.

4. Baugruppe nach Anspruch 3, wobei die Hülle (201) mindestens teilweise durch eine in Längsrichtung auf sich selbst gefaltete Verschlussfolie (111) gebildet ist, wobei die Verschlussfolie so dimensioniert ist, dass sie die Öffnung (304), die zwischen den beiden Wänden (302, 303) des Logistikmoduls (300) belassen wird, mindestens teilweise verschließt.

5. Baugruppe nach einem der Ansprüche 3 und 4, wobei die Hülle (201) so dimensioniert ist, dass sie den Stab (200) eng umschließt.

6. Baugruppe nach einem der Ansprüche 1 bis 5, wobei die Fallschutzklappe zwei Längskanten (101, 102) umfasst, von denen eine (101) mit einer verriegelten Befestigungsvorrichtung (105, 106, 107) versehen ist, um die Fallschutzklappe an einem Holm (311) einer (302) der beiden Wände zu befestigen, so dass dieser Holm eine Schwenkachse für die Fallschutzklappe bilden kann, wobei die andere Längskante (102) mit einer lösbaren Befestigungsvorrichtung (108, 109, 110) versehen ist.

7. Baugruppe nach Anspruch 6, wobei die Fallschutzklappe zwei Stabhalterungen (115, 116) umfasst, von denen sich eine (115) nahe einer (101) der beiden Längskanten der Fallschutzklappe befindet, wobei sich die andere Stabhalterung (116) nahe der anderen Längskante (102) befindet.

8. Baugruppe nach einem der Ansprüche 6 und 7, wobei die Fallschutzklappe eine Verstärkung (112, 113, 114) in einem Bereich umfasst, in dem sich die verriegelte Befestigungsvorrichtung (105, 106, 107) befindet.

9. Baugruppe nach Anspruch 8, wobei die Fallschutzklappe ein Verstärkungsband (112, 113, 114) umfasst, das sich zwischen der verriegelten Befestigungsvorrichtung (105, 106, 107) und der lösbaren Befestigungsvorrichtung (108, 109, 110) erstreckt.

10. Baugruppe nach einem der Ansprüche 1 bis 9, wobei der Stab (200) ein U-förmiges Profil umfasst.

11. Baugruppe nach einem der Ansprüche 1 bis 10, wobei mindestens eine der beiden Wände (302, 303) in Form einer Ladebordwand ausgebildet ist, die Zwischenquerträger (305, 315) umfasst, die sich zwischen einem Zwischenabschnitt eines Umfangsholms (311) der Ladebordwand und einem Zwischenabschnitt eines anderen Umfangsholms (312) der Ladebordwand erstrecken, wobei die Fallschutzklappe (100) eine Höhe aufweist, die größer ist als ein Abstand zwischen dem höchsten Zwischenquerträger und einem unteren Anschlagelement (314) an einem Umfangsholm (311) der Ladebordwand, wobei sich die Stabhalterung (115) und der Stab (200) zwischen zwei Querkanten (103, 104) der Fallschutzklappe erstrecken.

## Claims

1. Assembly comprising a logistics module (300) capable of storing goods, at least temporarily, the logistics module having an opening (304) left between two walls (302, 303), and an anti-fall flap (100) affixed to the logistics module, the anti-fall flap (100) being sized to close, at least partially, the opening (304) left between the two walls of the logistics module,
**characterised in that** the anti-fall flap is provided with a rod support (115) comprising one end (117) located at one transverse edge (103) of the anti-fall flap, and another end (118) located at another transverse edge (104) of the anti-fall flap, and a rod (200) inserted into the rod support and extending between the transverse edges of the anti-fall flap, the rod support being positioned such that the rod and the rod support ensure a vertical tension of the anti-fall flap closing the opening in order to prevent a sag of the anti-fall flap which could impair the anti-fall function thereof.

2. Assembly according to claim 1, wherein the rod support (115) is capable of removably holding the rod.

3. Assembly according to any one of claims 1 and 2, wherein the rod support (115) comprises a sheath (201) into which the rod (200) can be inserted.

4. Assembly according to claim 3, wherein the sheath (201) is at least partially formed by a closing sheet (111) folded longitudinally on itself, the closing sheet being sized to close, at least partially, the opening (304) left between the two walls (302, 303) of the logistics module (300).

5. Assembly according to any one of claims 3 and 4, wherein the sheath (201) is sized so as to tightly clasp the rod (200).

6. Assembly according to any one of claims 1 to 5, wherein the anti-fall flap comprises two longitudinal edges (101, 102) one (101) of which is provided with a locked fastening device (105, 106, 107) in order to attach the fall-off flap to a post (311) of one (302) of the two walls so that this post can constitute a pivot axis for the anti-fall flap, the other longitudinal edge (102) being provided with a removable fastening device (108, 109, 110).

7. Assembly according to claim 6, wherein the anti-fall flap comprises two rod supports (115, 116), one (115) of which is located near one (101) of the two longitudinal edges of the anti-fall flap, the other rod support (116) being located near the other longitudinal edge (102).

8. Assembly according to any one of claims 6 and 7, wherein the anti-fall flap comprises a reinforcement (112, 113, 114) in an area where the locked fastening device (105, 106, 107) is located.

9. Assembly according to claim 8, wherein the anti-fall flap comprises a reinforcement strip (112, 113, 114) extending between the locked fastening device (105, 106, 107) and the removable fastening device (108, 109, 110).

10. Assembly according to any one of claims 1 to 9, the rod (200) comprising a U-shaped profile.

11. Assembly according to any one of claims 1 to 10, wherein at least one of the two walls (302, 303) is in the form of a sidewall comprising intermediate cross members (305, 315) extending between an intermediate section of a peripheral post (311) of the sidewall and an intermediate section of another peripheral post (312) of the sidewall, the anti-fall flap (100) having a height larger than a distance between the highest intermediate cross member and a low stop element (314) on a peripheral post (311) of the sidewall, the rod support (115) and the rod (200) extending between two transverse edges (103, 104) of the anti-fall flap.
